# EUROPÄISCHE PATENTSCHRIFT

(11) **EP 2 425 156 B1**
(45) Veröffentlichungstag und Bekanntmachung des Hinweises auf die Patenterteilung: **21.08.2013**
(21) Anmeldenummer: 10718865.8
(22) Anmeldetag: 09.04.2010
(51) Int. Cl.: F16H 63/38, F16H 61/24

(54) **RASTIERVORRICHTUNG, INSBESONDERE FÜR EINE SCHALTWELLE**
RETAINING DEVICE, PARTICULARLY FOR A SHIFTER SHAFT
DISPOSITIF D'ENCLIQUETAGE, EN PARTICULIER POUR ARBRE DE SÉLECTION DES VITESSES

(30) Priorität: 30.04.2009 DE 102009019250
(43) Veröffentlichungstag der Anmeldung: 07.03.2012
(73) Patentinhaber: Koki Technik Transmission Systems GmbH, 09399 Niederwürschnitz (DE)
(72) Erfinder: QUINGER, Torsten, 09419 Herold (DE); HENDEL, Mathias, 08412 Werdau (DE)
(74) Vertreter: Arat, Dogan
(86) Internationale Anmeldenummer: PCT/EP2010/002208
(87) Internationale Veröffentlichungsnummer: WO 2010/124788

(56) Entgegenhaltungen:
- EP-A2- 0 974 777
- DE-U1-202007 008 231
- FR-A1- 2 829 549

## Beschreibung

Die vorliegende Erfindung betrifft eine Rastiervorrichtung nach dem Oberbegriff des Anspruchs 1.

### STAND DER TECHNIK

Rastiervorrichtungen werden in Schaltgetrieben zur kraftschlüssigen Arretierung der Schaltpositionen "Neutral" und "eingelegter Gang" eingesetzt. Dazu weisen herkömmliche Systeme eine so genannte M-Kontur auf, die mittels eines federkraftbeaufschlagten Rastelementes beide Arretierfunktionen abdeckt.

Daneben sind auch Systeme bekannt, bei denen beispielsweise zur Verstärkung der Rastierungswirkung eine Kombination von zwei Teilschaltkonturen mit jeweils einem Rastelement eingesetzt werden, bei denen jedoch zumindest eine der beiden Teilschaltkonturen als M-Kontur ausgeführt ist und damit zumindest teilweise sowohl die Schaltposition "Neutral" als auch "eingelegter Gang" arretiert.

In diesem Zusammenhang wird auf die FR 2 829 549 A1 und die DE 20 2007 008 231 U1 verwiesen, welche ebenfalls je eine Rastiervorrichtung offenbart. Die FR 2829549 A1 weist hierbei eine Rastfervorrichtung gemäß dem Oberbegriff von Anspruch 1, insbesondere für eine Schaltwelle eines Schaltgetriebes mit einer Schaltkontur und einem ersten Rastelement auf, wobei der Schaltkontur ein zweites Rastelement zugeordnet ist.

Daneben wird auf die EP 0 974 777 A2 hingewiesen. Dort ist eine Rastierungshülse und Schaltwelle offenbart.

Zur Rückführung der Schaltwelle innerhalb der Neutralgasse in die Grundstellung, vorzugsweise in die Schaltgasse 3./4. Gang werden entweder Federsysteme eingesetzt oder wiederum Rampenkonturen, die mittels eines federkraftbeaufschlagten Rastelementes die Rückstellkraft erzeugen. Diese Rampenkonturen sind entweder als separate Kontur oder in Kombination mit einer M-Kontur ausgeführt.

Die Herstellbarkeit dieser M-Konturen an den entsprechenden Rastierungsholsen ist jedoch aufgrund der Oberflächenstruktur mit den sich ergebenden kleinen Radien und engen Übergängen von Außen- und Innenradien begrenzt. Aus diesem Grund ergeben sich auch Zwänge in der Auslegung dieser M-Konturen, die zu begrenzten Gradienten im Verlauf der Schaltkraft über dem Schaltweg bzw. im Verlauf des Schaltmomentes über dem Schaltwinkel führen.

Weiterhin sind diese M-Konturen für eine sensorische Abtastung zum Zwecke der Schaltpositionsdetektierung ungeeignet, da sich aus der Oberflächenstruktur keine eindeutige Codierung ableiten lässt.

### AUFGABE

Aufgabe der vorliegenden Erfindung ist es eine Rastie vorrichtung zu schaffen, die die Funktionen Arretierung der Schaltpositionen "Neutral" und "eingelegter Gang" in bewährter Weise erfüllt und wesentlich einfacher herstellbar ist. Zudem sollen die Schaltzustände leichter detektierbar und die Rückstellfunktion innerhalb der Neutralgasse in die Gasse 3./4. Gang integriert werden können.

### LÖSUNG DER AUFGABE

Zur Lösung der Aufgabe führt der kennzeichnende Teil des Anspruchs 1.

Dabei steht mit der ersten Teilschaltkontur das erste und mit der zweiten Teilschaltkontur das zweite Rastelement in Wirkverbindung. Vorzugsweise sind die Rastelemente dazu mit einem Federelement federkraftbeaufschlagt. Die Erfindung ist nicht auf lediglich ein zweites Rastelement beschränkt, sondern kann noch weitere Rastelemente oder auch weitere Teilschaltkonturen aufweisen.

Vorzugsweise sind die Teilschaltkonturen um einen beliebigen Winkel radial versetzt, bevorzugt zwischen 90° und 270°, noch bevorzugter zwischen 150° und 210°. Sie sind vorteilhafterweise auf im wesentlichen gleicher axialer Höhe, insbesondere auf einer Hülse od. dgl. angeordnet. Dabei ist vom Erfindungsgedanken auch umfasst, dass die Tellschaltkonturen auf unterschiedlichen Hülsen angeordnet sind. Ebenfalls kann die Schaltkontur aus zwei neben- oder hintereinander liegenden Teilschaltkonturen ausgeführt sein. Auch die Ausbildung einer Schaltkontur, der zwei Rastelemente zugeordnet sind, ist vom Erfindungsgedanken umfasst.

Dabei wird die Funktion "Arretierung der Schaltposition Neutral" von der ersten Teilschaltkontur als Neutralrastierkontur und dem dazugehörigen ersten Rastelement in einer Neutralrastierung übernommen.

Die Funktion "Arretierung der Schaltposition eingelegter Gang" wird von der zweiten Teilschaltkontur als Gangrastierkontur und dem zweiten Rastelement übernommen. Besonders vorteilhaft durch die erfindungsgemässe Ausbildung der Rastvorrichtung mit zwei Rastelementen ist, dass die sich dadurch ergebenden Tellschaltkonturen eine deutlich weichere Oberflächenstruktur mit deutlich geringeren Aussen- und Innenradien aufweisen. Dadurch ist die Schaltkontur bzw. die Teilschaltkonturen wesentlich einfacher und kostengünstiger herstellbar.

Weiterhin wird mit den beiden Wirkverbindungen die Möglichkeit geschaffen, gezielt die jeweiligen Einzelschaltkraft- bzw. Schaltmomentverläufe zu überlagern, was für eine weitere Vereinfachung der Teilschaltkonturen und einen erhöhten Schaltkomfort genutzt werden kann.

Für die Detektierbarkeit der Schaltzustände ergeben sich zwei Teilschaltkonturen, die sich beide für die eindeutige Erkennung beider Schaltzustände eignen. Dabei ist jedoch eine Teilschaltkontur für die genaue Erfassung der Schaltposition "Neutral" und die andere Teilschaltkontur die genaue Erfassung der Schaltposition "eingelegter Gang" geeigneter.

Weiterhin lassen sich in einer der beiden oder in beide beschriebene Teilschaltkonturen, als Überlagerung Rampen in Wählrichtung zum Zwecke der Rückführung in die Grundstellung einarbeiten. Somit ist es möglich, auch in diesem beschriebenen System mit insgesamt zwei Rastelementen alle Funktionen abzudecken.

Besondere Vorteile durch diese Aufteilung ergeben sich zusammenfassend in der Herstellbarkeit der Rastierungshülsen. Weiterhin wird die Detektierbarkeit der Schaltzustände über die entsprechenden Wirkverbindungen und ihrer Oberflächenstrukturen deutlich verbessert und es lassen sich in der Überlagerung beider Wirkverbindungen vorteilhaftere Schaltkraft- bzw. Schaltmomentverläufe erzielen als bei herkömmlichen Rastierungshülsen erzielen. Dabei kann die Rückstellfunktion in die Gasse 3./4. in eine gangunabhängig realisiert werden und in eine oder beide Wirkfunktionen integriert sein.

Grundsätzlich stehen die Rastelement so miteinander in Wirkverbindung, dass sie, bspw. bei einem Schaltvorgang gekoppelte Bewegungen ausführen.

Die Wirkverbindung der Rastelemente erfolgt so, dass entsprechend der Ausbildung der Teilschaltkonturen Wählbewegungen translatorisch und die Schaltbewegungen rotatorisch oder bei entgegengesetzter Ausbildung die Wälbewegungen rotatorisch und die Schaltbewegungen translatorisch ausgeführt werden.

Zumindest eine der beiden Teilschaltkonturen kann zur Detektierung der Schaltposition des Rückwärtsgangs ausgebildet werden. Ebenso kann auch über zumindest eine der beiden Teilschaltkonturen die Schaltposition "Gang eingelegt" und/oder "Neutralposition" detektierbar sein.

Ausserdem können die beiden Teilschaltkonturen so ausgebildet, dass die Rastelemente bei einer gekoppelten Bewegung an einer Teilschaltkontur entlang einer Steigung und an der entsprechenden anderen Teilschaltkontur entlang einem Gefälle laufen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Prinzipdarstellung einer erfindungsgemässen Rastvorrichtung eines Schaltgetriebes;
Figur 2 einen Schaltmoment- bzw. Schaltkraftverlauf für ein System gemäss Figur 1;
Figur 3 eine Prinzipdarstellung eines weiteren Ausführungsbeispiels einer erfindungsgemässen Rastvorrichtung eines Schaltgetriebes;
Figur 4 einen Schaltmoment bzw. Schaltkraftverlauf für ein System gemäss Figur 3;
Figur 5 eine perspektivische Ansicht einer Schaltwelle mit Rastierungshülse für eine Ausführungsform der Erfindung;
Figur 6 eine weitere perspektivische Ansicht der Schaltwelle der Figur 5;

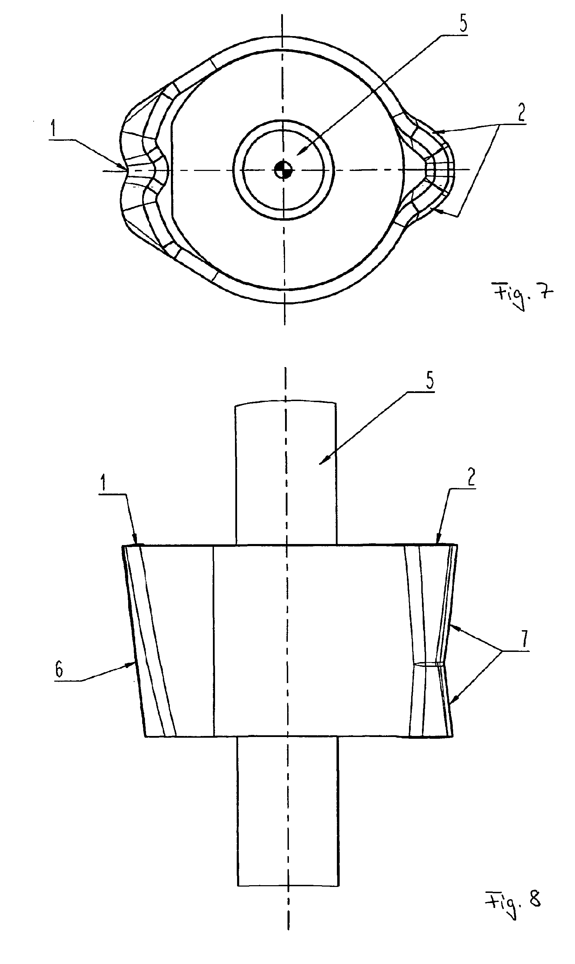

Figur 7 eine Vorderansicht der Schaltwelle nach Figur 5 und 6;
Figur 8 eine Draufsicht der Schaltwelle nach Figur 7.

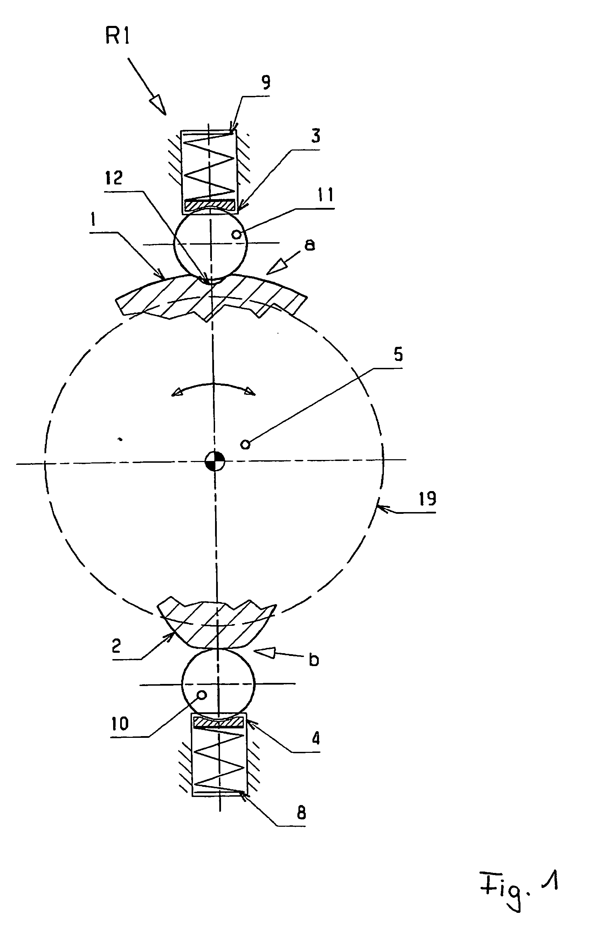

Figur 1 zeigt einen prinzipiellen Aufbau einer erfindungsgemässen Rastvorrichtung R1. Eine Schaltkontur der Rastvorrichtung R1 ist aus zwei Teilschaltkonturen, nämlich einer Neutralrastierkontur 1 und einer Gangrastierkontur 2 gebildet. Diese sind gegenüberliegend auf einem Umfang 19 angeordnet. Die Teilschaltkonturen stehen so miteinander in Wirkverbindung dass sie gekoppelte Bewegungen ausführen. Der Neutralrastierkontur 1 ist ein erstes Rastelement 3 zugeordnet. Analog ist der Gangrastierkontur 2 ein zweites Rastelement 4 zugeordnet. Das erste Rastelement 3 besteht aus einer Kugel 11, die durch ein Federelement 9 federkraftbeaufschlagt ist. Die Neutralrastierkontur 1 weist eine Mulde 12 auf, in diese greift die Kugel 11. Im Gegensatz dazu ist die Gangrastierkontur 2 leicht ballig oder eben, aber ohne Vertiefung ausgebildet.

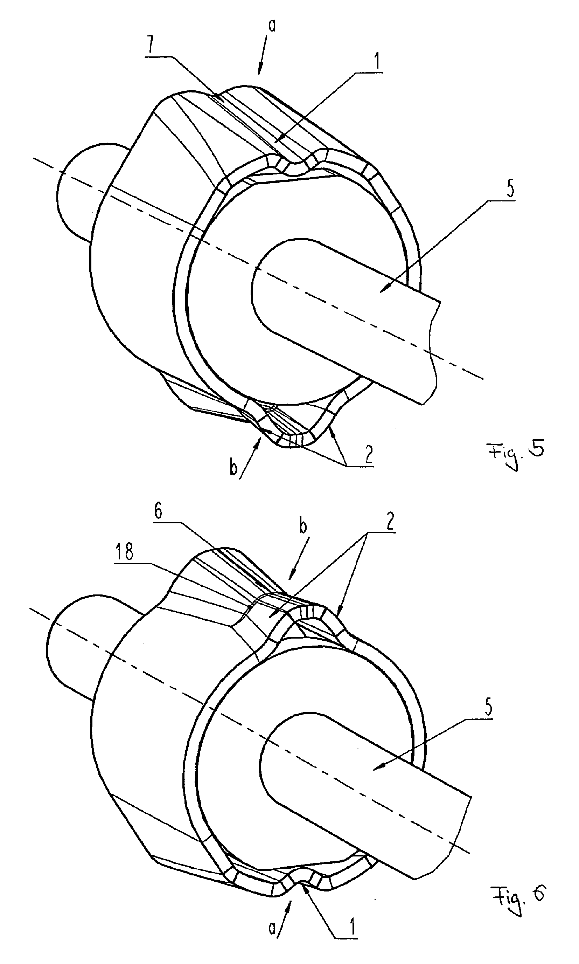

Weitere Ausführungsbeispiele der Teilschaltkonturen sind in den Figuren 5 und 6 gezeigt. So weist die Tellschaltkontur 1 eine Wählrückführrampe 7, die als Vertiefung ausgeführt ist, auf. Eine Wählrückführrampe 6 an der Teilschaltkontur 2 ist als Auswölbung mit einer Einschnürung 18 ausgebildet.

Die Funktionsweise der vorliegenden Erfindung ist folgende:

Die Neutralrastierkontur 1 und das erste Rastelement 3 bilden eine Neutralrastierung a. Die Gangrastierkontur 2 bildet mit dem zweiten Rastelement 4 eine Gangrastierung b.

Die Funktion "Arretierung der Schaltposition Neutral" wird von der Neutralrastierung a übernommen. Die Funktion "Arretierung der Schaltposititon eingelegter Gang" wird von der Gangrastierung b übernommen.

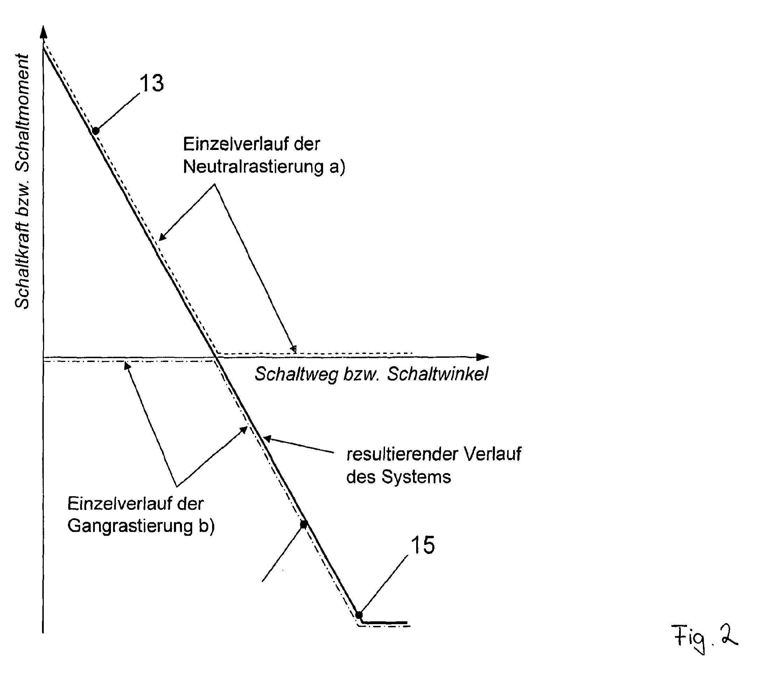

Figur 2 zeigt einen Schaltkraft- bzw. Schaltmomentverlauf, der sich bei einer erfindungsgemässen Rastvorrichtung R1 gemäss Figur 1 ergibt. Dabei zeigt die Linie 13 den Einzelverlauf der Neutralrastierung a und die Linie 14 den Einzelverlauf der Gangrastierung b. Kombiniert ergeben diese einen gemeinsamen Schaltkraft- bzw. Schaltmomentverlauf gemäss Linie 15.

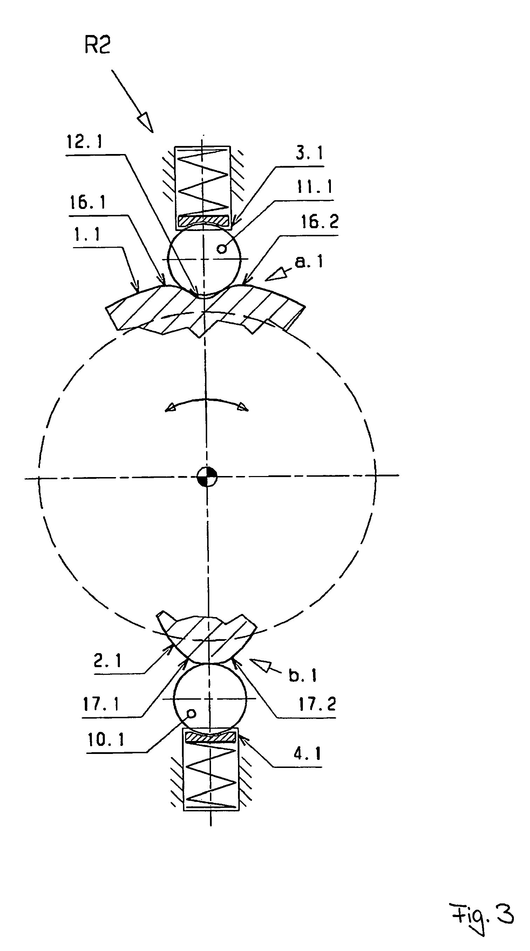

Figur 3 zeigt eine Prinzipskizze eines weiteren Ausführungsbeispiels einer erfindungsgemässen Rastierungsvorrichtung R2. Diese ist im wesentlichen analog zur Rastierungsvorrichtung R1 aus einer Neutralrastierung a.1 und eine Gangrastierung b.1 ausgeführt.

Der Unterschied liegt darin, dass die Teilschaltkonturen, also die Neutralrastierkontur 1.1 und die Gangrastierkontur 2.1 weicher und mit sanfteren Übergängen, d.h. mit geringeren Steigungen und damit für geringere erforderliche Schaltkraft ausgelegt, als bei der R1 ausgeführt sind. Dies wird besonders an einer Mulde 12.1, die mit sehr weichen Übergängen 16.1 und 16.2 an die Oberfläche der übrigen Schaltkontur anschliesst, deutlich. Genauso ist auch eine Oberfläche der Gangrastierkontur 2.1 mit Rundungen 17.1 und 17.2 versehen.

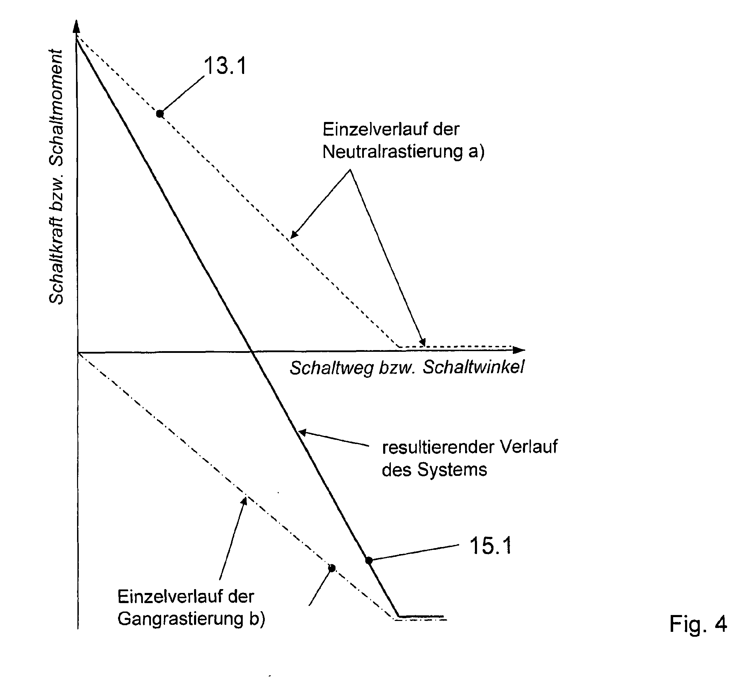

Dabei sind die Teilschaltkonturen 1.1 und 2.1 so ausgebildet, dass eines der Rastelemente 3.1 und 4.1 bei der gekoppelten Bewegung der Teilschaltkonturen eine Steigung an der Wählrückführrampe 6 während das andere Rastelement ein Gefälle an der Wählrückführrampe 7 durchläuft. Durch diese bevorzugte Weiterbildung der Erfindung ergeben sich, wie aus Figur 4 hervorgeht, flachere Einzelverläufe 13.1 und 14.1. Bei Überlagerung dieser Verläufe ergibt sich jedoch ein vergleichbarer resultierender Verlauf 15.1 des Systems wie in Figur 2.

### Bezugszeichenliste

| | | | | | |
|---|---|---|---|---|---|
| 1 | Neutralrastierkontur | 34 | | 67 | |
| 2 | Gangrastierkontur | 35 | | 68 | |
| 3 | Rastelement | 36 | | 69 | |
| 4 | Rastelement | 37 | | 70 | |
| 5 | Schaltwelle | 38 | | 71 | |
| 6 | Wählrückführrampe | 39 | | 72 | |
| 7 | Wählrückführrampe | 40 | | 73 | |
| 8 | Federelement | 41 | | 74 | |
| 9 | Federelement | 42 | | 75 | |
| 10 | Kugel | 43 | | 76 | |
| 11 | Kugel | 44 | | 77 | |
| 12 | Mulde | 45 | | 78 | |
| 13 | Neutrastierung a | 46 | | 79 | |
| 14 | Gangrastierung b | 47 | | | |
| 15 | Gesamtschaltverlauf | 48 | | | |
| 16 | Übergang | 49 | | | |
| 17 | Rundung | 50 | | a | Neutralrastierung |
| 18 | Einschnürung | 51 | | b | Gangrastierung |
| 19 | Umfang | 52 | | R1 | Rastierungshülse |
| 20 | | 53 | | R2 | Rastierungshülse |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Rastiervorrichtung (R1, R2), insbesondere für eine Schaltwelle (5) eines Schaltgetriebes, mit einer Schaltkontur und einem ersten Rastelement (3, 3.1), welches aus einer kugel (11), die durch ein Federelement (9, 9.1) beaufschlagt ist, besteht, wobei der Schaltkontur ein zweites Rastelement (4, 4.1) zugeordnet ist, wobei die Schaltkontur eine erste und eine zweite Teilschaltkontur aufweist, wobei
die erste Teilschaltkontur eine Neutralrastierkontur (1, 1.1) ausbildet, die mit dem ersten Rastelement (3, 3.1) eine Neutralrastierung (a, a.1) bildet, wobei die Funktion "Arretierung der Schaltposition Neutral" von der ersten Teilschaltkontur als Neutralrastierkontur (1, 1.1) und dem dazugehörigen ersten Rastelement (3, 3.1) in einer Neutralrastierung (a, a1) übernommen ist, und wobei
die Neutralrastierkontur (1, 1.1) eine Mulde (12) aufweist, in welche die kugel (11) greift,
**dadurch gekennzeichnet, dass**
- die zweite Teilschaltkontur eine Gangrastierkontur (2, 2.1) ausbildet, die mit dem zweiten Rastelement (4, 4.1) eine Gangrastierung (b, b.1) bildet, wobei die Funktion "Arretierung der Schaltposition eingelegter Gang" von der zweiten Teilschaltkontur als Gangrastierkontur (2, 2.1) und dem zweiten Rastelement (4, 4.1) übernommen ist, wobei
- die Gangrastierkontur (2, 2.1) leicht ballig oder eben ausgebildet ist.

2. Rastiervorrichtung (R1, R2) nach Anspruch 1, **dadurch gekennzeichnet, dass** das erste Rastelement (3, 3.1) mit der ersten Teilschaltkontur und das zweite Rastelement (4, 4.1) mit der zweiten Teilschaltkontur in Wirkverbindung steht.

3. Rastiervorrichtung (R1, R2) nach Anspruch 1 oder 2, **dadurch gekennzeichnet, dass** die Teilschaltkonturen gekoppelte Bewegungen ausführen.

4. Rastiervorrichtung (R1, R2) nach wenigstens einem der Ansprüche 1 bis 3, **dadurch gekennzeichnet, dass** die Rastelemente (3, 3.1, 4, 4.1) mit einem Winkelabstand von 90° bis 270° angeordnet sind.

5. Rastiervorrichtung (R1, R2) nach einem der vorhergehenden Ansprüche, **dadurch gekennzeichnet, dass** das zweite Rastelement (4, 4.1) durch ein Federelement (8, 8.1) federkraftbeaufschlagt ist.

6. Rastiervorrichtung (R1, R2) nach einem der vorhergehenden Ansprüche, **dadurch gekennzeichnet, dass** in zumindest einer der Teilschaltkonturen (1, 1.1, 2, 2.1) zumindest eine Rampe In Wählrichtung zum Zwecke der Rückführung in die Grundstellung eingearbeitet ist.

7. Rastiervorrichtung (R1, R2) nach einem der Ansprüche 3 bis 6, **dadurch gekennzeichnet, dass** die beiden Teilschaltkonturen (1, 1.1, 2, 2.1) so ausgeführt sind, dass sie jeweils zumindest einen Bereich aufweisen, der ausgebildet ist, so dass bei Bewegung der Schaltkontur eines der Rastelemente (3, 3.1) eine Steigung und das andere der Rastelemente (4, 4.1) ein Gefälle durchläuft.

8. Rastiervorrichtung (R1, R2) nach einem der vorhergehenden Ansprüche, **dadurch gekennzeichnet, dass** die Schaltkontur für eine translatorische Wählbewegung und/oder für eine rotatorische Schaltbewegung ausgebildet ist.

## Claims

1. A detent device (R1, R2), in particular for a gearshift shaft (5) of a manual transmission, with a shift contour and a first detent element (3, 3.1) which consists of a ball (11) which is acted upon by a spring element (9, 9.1), a second detent element (4, 4.1) being associated with the shift contour, the shift contour having a first and a second partial shift contour,
the first partial shift contour forming a neutral detent contour (1, 1.1) which forms with the first detent element (3, 3.1) a neutral detent means (a, a.1), the function "locking of the neutral shift position" being taken over by the first partial shift contour as neutral detent contour (1, 1.1) and by the associated first detent element (3, 3.1) in a neutral detent means (a, a1), and
the neutral detent contour (1, 1.1) having a trough (12) in which the ball (11) engages,
**characterised in that**
- the second partial shift contour forms a gear detent contour (2, 2.1) which forms with the second detent element (4, 4.1) a gear detent means (b, b.1), the function "locking of the engaged-gear shift position" being taken over by the second partial shift contour as gear detent contour (2, 2.1) and by the second detent element (4, 4.1),
- the gear detent contour (2, 2.1) is formed slightly crowned or flat.

2. A detent device (R1, R2) according to Claim 1, **characterised in that** the first detent element (3, 3.1) is in an operative connection with the first partial shift contour, and the second detent element (4, 4.1) with the second partial shift contour.

3. A detent device (R1, R2) according to Claim 1 or 2, **characterised in that** the partial shift contours perform coupled movements.

4. A detent device (R1, R2) according to at least one of Claims 1 to 3, **characterised in that** the detent elements (3, 3.1, 4, 4.1) are arranged with an angular spacing of 90° to 270°.

5. A detent device (R1, R2) according to one of the preceding claims, **characterised in that** the second detent element (4, 4.1) is acted on with a spring force by a spring element (8, 8.1).

6. A detent device (R1, R2) according to one of the preceding claims, **characterised in that** at least one ramp is incorporated in at least one of the partial shift contours (1, 1.1, 2, 2.1) in the selection direction for the purpose of returning into the basic position.

7. A detent device (R1, R2) according to one of Claims 3 to 6, **characterised in that** the two partial shift contours (1, 1.1, 2, 2.1) are embodied such that they in each case have at least one region which is formed so that upon moving the shift contour of one of the detent elements (3, 3.1) passes through an ascending slope, and the other one of the detent elements (4, 4.1) passes through a descending slope.

8. A detent device (R1, R2) according to one of the preceding claims, **characterised in that** the shift contour is formed for a translational selection movement and/or for a rotary shift movement.

## Revendications

1. Dispositif d'encliquetage (R1, R2), en particulier pour arbre de sélection des vitesses (5) d'un mécanisme de changement de vitesse, avec un contour de changement de vitesse et un premier élément d'encliquetage (3, 3.1) qui consiste en une bille (11) qui est soumise à une pression par un élément de ressort (9, 9.1), dans lequel au contour de changement de vitesse est associé un deuxième élément d'encliquetage (4, 4.1), le contour de changement de vitesse présentant un premier et un deuxième contour de changement de vitesse partiel, dans lequel le premier contour de changement de vitesse partiel constitue un contour d'encliquetage neutre (1, 1.1) qui forme avec le premier élément d'encliquetage (3, 3.1) un encliquetage neutre (a, a.1), dans lequel la fonction "d'arrêt de la position de changement de vitesse neutre" est assumée par le premier contour de changement de vitesse partiel comme contour d'encliquetage neutre (1, 1.1) et le premier élément d'encliquetage (3, 3.1) y relatif dans un encliquetage neutre (a, a1), et
le contour d'encliquetage neutre (1, 1.1) présente une cuvette (12) dans laquelle s'engage la bille (11),
**caractérisé par le fait que**
- le deuxième contour de changement de vitesse partiel constitue avec le deuxième élément d'encliquetage (4, 4.1) un contour d'encliquetage de vitesse (2, 2.1) qui forme avec le deuxième élément d'encliquetage (4, 4.1) un encliquetage de vitesse (b, b.1), la fonction "d'arrêt de la position de changement de vitesse - vitesse placée" étant assumée par le deuxième contour de changement de vitesse partiel comme contour d'encliquetage de vitesse (2, 2.1) et le deuxième élément d'encliquetage (4, 4.1), dans lequel
- le contour d'encliquetage de vitesse (2, 2.1) est réalisé légèrement bombé ou lisse.

2. Dispositif d'encliquetage (R1, R2) selon la revendication 1, **caractérisé par le fait que** le premier élément d'encliquetage (3, 3.1) communique en fonctionnement avec le premier contour de changement de vitesse partiel et le deuxième élément d'encliquetage (4, 4.1) avec le deuxième contour de changement de vitesse partiel.

3. Dispositif d'encliquetage (R1, R2) selon la revendication 1 ou 2, **caractérisé par le fait que** les contours de changement de vitesse partiels effectuent des mouvements couplés.

4. Dispositif d'encliquetage (R1, R2) selon au moins l'une des revendications 1 à 3, **caractérisé par le fait que** les éléments d'encliquetage (3, 3.1, 4, 4.1) sont disposés à une distance angulaire de 90° à 270°.

5. Dispositif d'encliquetage (R1, R2) selon l'une des revendications précédentes, **caractérisé par le fait que** le deuxième élément d'encliquetage (4, 4.1) est soumis à une pression élastique par un élément de ressort (8, 8.1).

6. Dispositif d'encliquetage (R1, R2) selon l'une des revendications précédentes, **caractérisé par le fait que** dans au moins l'un des contours de changement de vitesse partiels (1, 1.1, 2, 2.1) est réalisée au moins une rampe dans une direction au choix aux fins du retour à la position de base.

7. Dispositif d'encliquetage (R1, R2) selon l'une des revendications 3 à 6, **caractérisé par le fait que** les deux contours de changement de vitesse partiels (1, 1.1, 2, 2.1) sont réalisés de sorte qu'ils présentent, chacun, au moins une zone qui est réalisée de sorte que lors du mouvement le contour de changement de vitesse de l'un des éléments d'encliquetage (3, 3.1) parcoure une montée et l'autre des éléments d'encliquetage (4, 4.1) une descente.

8. Dispositif d'encliquetage (R1, R2) selon l'une des revendications précédentes, **caractérisé par le fait que** le contour de changement de vitesse est réalisé pour un mouvement alternatif en translation et/ou pour un mouvement de changement de vitesse rotatif.
